# EUROPEAN PATENT SPECIFICATION

(11) **EP 2 620 537 B1**
(45) Date of publication and mention of the grant of the patent: **07.09.2016**
(21) Application number: 12152609.9
(22) Date of filing: 26.01.2012
(51) Int. Cl.: D06F 37/20, D06F 37/30

(54) **Laundry washing machine**
Waschmaschine
Machine à laver le linge

(43) Date of publication of application: 31.07.2013
(73) Proprietor: Electrolux Home Products Corporation N.V., 1130 Brussels (BE)
(72) Inventor: Morandini, Stefano, 33080 Porcia (PN) (IT)
(74) Representative: Donatello, Daniele

(56) References cited:
- EP-A1- 2 388 365
- EP-A2- 1 693 499
- EP-A2- 2 037 032
- EP-A2- 2 055 821
- WO-A1-2007/113255
- GB-A- 2 360 885

## Description

The present invention relates to a laundry washing machine.

In particular, the present invention relates to a front-loading home laundry washing machine, to which the following description refers purely by way of example without this implying any loss of generality.

As is known, currently marketed front-loading home laundry washing machines generally comprise: a substantially parallelepiped-shaped, outer boxlike casing structured for resting on the floor; a substantially cylindrical, bell-shaped washing tub which is suspended in floating manner inside the casing via a number of coil springs and shock-absorbers, with the front opening or mouth directly facing a laundry loading/unloading pass-through opening realized in the front wall of the casing; a substantially cylindrical, elastically-deformable bellows which connects in watertight manner the front mouth of the bell-shaped washing tub to the laundry loading/unloading opening on front wall of the casing; and a porthole door which is hinged to the front wall of the casing to rotate to and from a closing position in which the door rests on the front face of the casing to close the laundry loading/unloading on the front wall and watertight seal the washing tub.

The laundry washing machines of the above type furthermore comprise: a substantially bell-shaped and cylindrical revolving drum which is structured for housing the laundry to be washed, and is housed in axially rotating manner inside the washing tub so as to be able to rotate about the substantially horizontally-oriented longitudinal reference axis of the tub; an electric motor which is attached outside the washing tub, and is mechanically connected to the revolving drum for driving into rotation the revolving drum inside the washing tub; a water and detergent supplying assembly which is structured for selectively feeding into the washing tub, according to the selected washing cycle, a given amount of detergent, softener and/or other washing agent suitably mixed with the fresh water arriving from the water mains, or simply a given amount of fresh water arriving from the water mains; and finally an electronic central control unit which controls both the electric motor and the solenoid valves of the water and detergent supplying assembly to selectively perform one of the user-selectable washing cycles stored in the same central control unit.

More specifically, the revolving drum is rigidly fixed/mortised to a first axial end of a central supporting pin which extends in axially rotating manner though the rear wall of the washing tub and sticks out from the back of the washing tub, whereas the electric motor is usually attached beneath the washing tub with the drive shaft oriented locally substantially parallel the longitudinal reference axis of the washing tub, and is mechanically connected to the central supporting pin of the revolving drum via a driving belt assembly so to directly drive into rotation said supporting pin.

Since in the laundry washing machines currently on the market the electric motor is generally a variable-speed electric motor, the laundry washing machines of the above type are additionally provided with a power control unit, namely an electronically-controlled inverter, which is able to vary/control frequency and/or voltage of the electric energy supplied to the electric motor so as to continuously control the rotating speed of the motor. This power control unit is generally attached to a lateral wall of the boxlike casing or directly to the engine pod of the electric motor.

EP 2 055 821 discloses a method of operating a motor, the method comprising: operating a motor at a first speed; operating the motor in negative slip; unbalancing at least one phase of the motor to dissipate regeneration energy using windings of the motor; and wherein a next motor speed is decreased to a speed less than the first speed. An apparatus for carrying out the method is also presented.

WO 2007/113255 discloses a washing machine comprising a motor for driving the drum and a tub, wherein on the outer wall of the tub a housing is formed for mounting the motor's socket.

EP 1 693 499 discloses an inner assembly suspended such that it can vibrate in a laundry treatment machine. The assembly has a laundry drum and a drive such as electric motor, for driving the laundry drum. A vibration sensor is rigidly coupled to a component of the internal unit. The vibration sensor is an electronic sensor. The vibration sensor is based on a measurement principle using capacitive effects and or inductive effects and or piezoelectric effects. A printed circuit board and the vibration sensor is a printed circuit board module on the printed circuit board.

An electric motor assembly with the power control unit fixed directly to the engine pod is disclosed in PCT patent application No. 2007/024862.

Although appearing extremely advantageous because of the almost complete removal of the long power cables connecting the power control unit to the electric motor, the attachment of the power control unit directly to the engine pod of the electric motor however exposes the electronic components of the power control unit to extremely high mechanical and thermal stresses that sometimes cause an early breaking of the power control unit. Today's electric motors, in fact, are extremely compact and powerful, therefore they are used to quickly reach very high temperatures when maximum power is requested.

Furthermore the motor assembly formed by electric motor and power control unit is relatively heavy therefore its attachment to the washing tub along the appliance production line is relatively difficult with all problems concerned.

Aim of the present invention is to realize motor assembly supporting structure designed to eliminate the drawbacks referred above.

In compliance with the above aims, according to the present invention there is provided a laundry washing machine as defined in Claim 1 and preferably, though not necessarily, in any one of the dependent claims.

There is provided a laundry washing machine comprising an outer casing structured for resting on the floor, a hollow washing tub arranged inside the casing, a revolving drum structured for housing the laundry to be washed and housed in axially rotating manner inside said washing tub, and a motor assembly structured for driving into rotation said revolving drum inside the washing tub; said the motor assembly in turn comprising an electric motor and a power control unit structured to energize the electric motor, both attached beneath the washing tub; wherein the washing tub is provided with distinct and separated, first and second coupling portions; the electric motor being attached to the first coupling portion of the washing tub and the power control unit being attached to the second coupling portion of the washing tub, beside the electric motor.

Preferably, the first and second coupling portions are adjacent to one another, so that the power control unit is attached to the second coupling portion of the washing tub, beside the electric motor.

Preferably, the power control unit is provided with a coupling member which is suitably shaped/structured to be engaged into a complementary coupling socket located on the bottom of the washing tub, so to let the power control unit hang down from the bottom of the washing tub.

Preferably, the coupling member of said power control unit is structured to form a substantially dovetail joint with the complementary coupling socket on the washing tub

Preferably, the coupling member of said power control unit comprises a substantially dovetail-shaped, outwards-projecting coupling tailpiece or extension which is suitably shaped/structured to be inserted into a substantially dovetail-shaped, complementary coupling socket.

Preferably, the power control unit is provided with at least one outwards-projecting, connecting bracket or arm which extends upwards to reach the bottom of the washing tub and is suitably shaped/structured for being rigidly fixed/anchored to the to a corresponding supporting member of the washing tub (3).

Preferably, the complementary coupling socket (21) and/or supporting member is/are realized in one piece with the washing tub (3).

Preferably, the laundry washing machine furthermore comprises an electrically-operated water heater which is housed inside the washing tub for rapidly heating up the washing water accumulated on the bottom of the same washing tub; and in that the coupling socket is located immediately beneath said electrically-operated water heater.

Preferably, the electrically-operated water heater is housed inside an outwards-projecting basin-shaped bulge realized on the bottom of the washing tub, and in that the coupling socket is located on the bottom of said outwards-projecting basin-shaped bulge of the washing tub housing said water heater.

Preferably, the power control unit comprises a motherboard supporting the electronic component parts, and a metal body coupled to said motherboard so as to form the heat sink of the motherboard, wherein the coupling member of the power control unit and/or the connecting bracket or arm of the power control unit are realised in one piece with said metal body.

Preferably, the electric motor is attached to one or more coupling members located on the bottom of the washing tub and structured to let the electric motor hang down from the bottom of the washing tub.

Preferably, the one or more coupling members supporting the electric motor are realized in one piece with the washing tub.

Preferably, the electric motor is attached to the washing tub via an intermediate supporting structure that hangs down from the bottom of the washing tub, and in that the power control unit furthermore comprises an electric wire assembly structured for electricity connecting the power control unit to the adjacent electric motor; said electric wire assembly being provided with a power connector structured/shaped for being coupleable to a corresponding power socket located on the intermediate supporting structure of said electric motor.

Preferably, the intermediate supporting structure comprises two cup-shaped hemi-shells which are properly structured/shaped to fit/match each to a respective axial end of the stator assembly of the electric motor; and a number of longitudinal connecting bolts structured for connecting the two hemi-shells to one another so that the two cup-shaped hemi-shells are forced to clamp/embrace and encapsulate in between themselves the stator assembly of the electric motor; each cup-shaped hemi-shell being furthermore suitably shaped/structured so as to be stably fixable/connectable to the bottom of washing tub for hanging down from the bottom of the same washing tub.

Preferably, the said power socket is fixed/located on one of said cup-shaped hemi-shells and is electricity connected to the stator windings of electric motor via a number of electric cables.

Preferably, the power socket is arranged onto the intermediate supporting structure locally immediately adjacent to the power control unit.

Preferably, the hollow washing tub is suspended in floating manner inside the outer casing via a suspension assembly comprising a number of coil springs connecting the upper section of the outer casing to the beneath-located upper part of the washing tub, and one or more dampers connecting the bottom part of the washing tub to the beneath-located bottom section of the outer casing.

Preferably, the bottom part of the washing tub is connected to the beneath-located bottom section of the casing by at least two dampers located on opposite sides of the vertical mid plane of the household appliance, and in that both the electric motor and the power control unit are attached to the bottom part of the washing tub on the sector/area laterally delimited by the mechanical connections to said dampers.

Preferably, the electric motor is a variable-speed electric motor and the power control unit is structured to directly energize the electric motor so as to continuously control the rotating speed of the drive shaft of the motor.

Preferably, the variable-speed electric motor is an asynchronous electric motor or a switched-reluctance electric motor or a brushless electric motor, and in that the power control unit is an electronically-controlled inverter structured for varying/ controlling frequency and/or voltage of the electric energy supplied to the electric motor so as to continuously control the rotating speed of the drive shaft of the motor.

Preferably, the washing tub is composed by a substantially cup-shaped rear hemi-shell and by a substantially funnel-shaped front hemi-shell, both made of plastic material and reciprocally coupled to one another in watertight manner so as to form a substantially cylindrical and bell-shaped, rigid vessel. The coupling members that support the electric motor are preferably realized in one piece with the substantially cup-shaped rear hemi-shell of washing tub, preferably via an injection moulding process. Similarly the coupling socket and/or the supporting member that support the power control unit are preferably realized in one piece with the substantially cup-shaped rear hemi-shell of washing tub, preferably via an injection moulding process.

A non-limiting embodiment of the present invention will now be described, by way of example, with reference to the accompanying drawings, in which:
A non-limiting embodiment of the present invention will now be described, by way of example, with reference to the accompanying drawings, in which:
   - Figures 1 and 2 are two perspective views of a front-loading, home laundry washing machine realized in accordance with the teachings of the present invention;
   - Figures 3 and 4 are two perspective views of the washing tub assembly of the Figures 1 and 2 front-loading laundry washing machine, with parts removed for clarity;
   - Figures 5 and 6 are two partly-exploded perspective views of the lower portion of the washing tub assembly shown in Figures 3 and 4, with parts removed for clarity; whereas
   - Figures 7 and 8 are two enlarged views of the lower portion of the washing tub assembly shown in Figures 3 and 4, with parts removed for clarity.

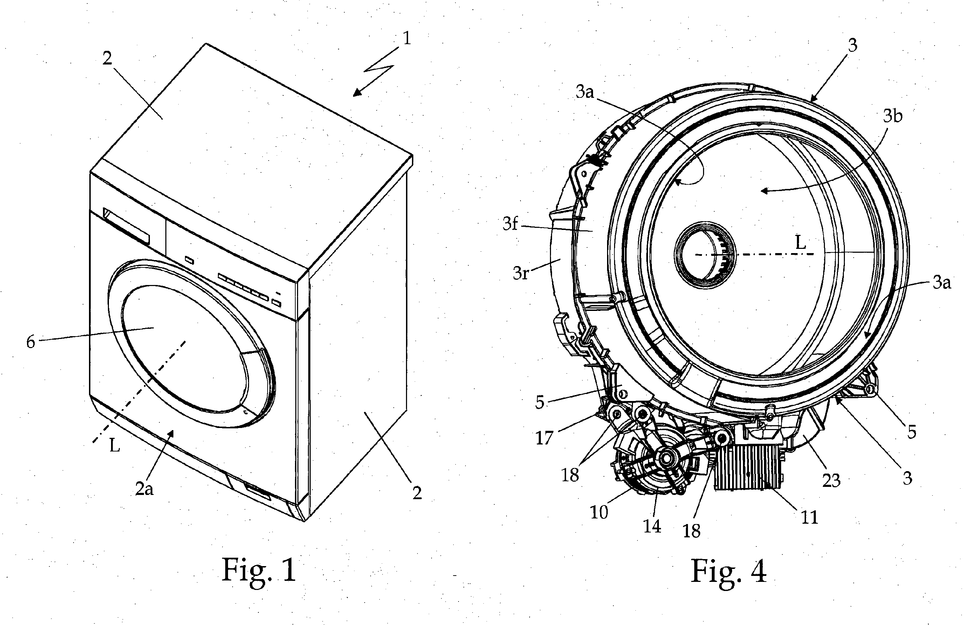

With reference to Figures 1 to 4, reference number 1 indicates as a whole a home laundry washing machine which basically comprises: a preferably, though not necessarily, substantially parallelepiped-shaped, outer boxlike casing 2 structured for resting on the floor; a preferably, though not necessarily, substantially cylindrical and bell-shaped, hollow washing tub 3 which is arranged inside the casing 2 with its front opening or mouth 3a directly facing a laundry loading/unloading pass-through opening realized in the front wall 2a of the boxlike casing 2; and a substantially cylindrical, bell-shaped revolving drum (not shown) which is structured for housing the laundry to be washed, and is housed in axially rotating manner inside the washing tub 3 so to be able to freely rotate about its longitudinal reference axis.

In the example shown, in particular, washing tub 3 is preferably, though not necessarily, suspended in floating manner inside the boxlike casing 2 via a suspension assembly preferably comprising a number of coil springs (not shown) connecting the upper section of the outer boxlike casing 2 to the beneath-located upper part of the washing tub 3, and one or more dampers 4 connecting the bottom part of the washing tub 3 to the beneath-located bottom wall of the outer boxlike casing 2. The front opening or mouth 3a of washing tub 3 is, instead, preferably connected in watertight manner to the laundry loading/unloading opening on front wall 2a of casing 2 via a substantially cylindrical, elastically-deformable bellows (not shown).

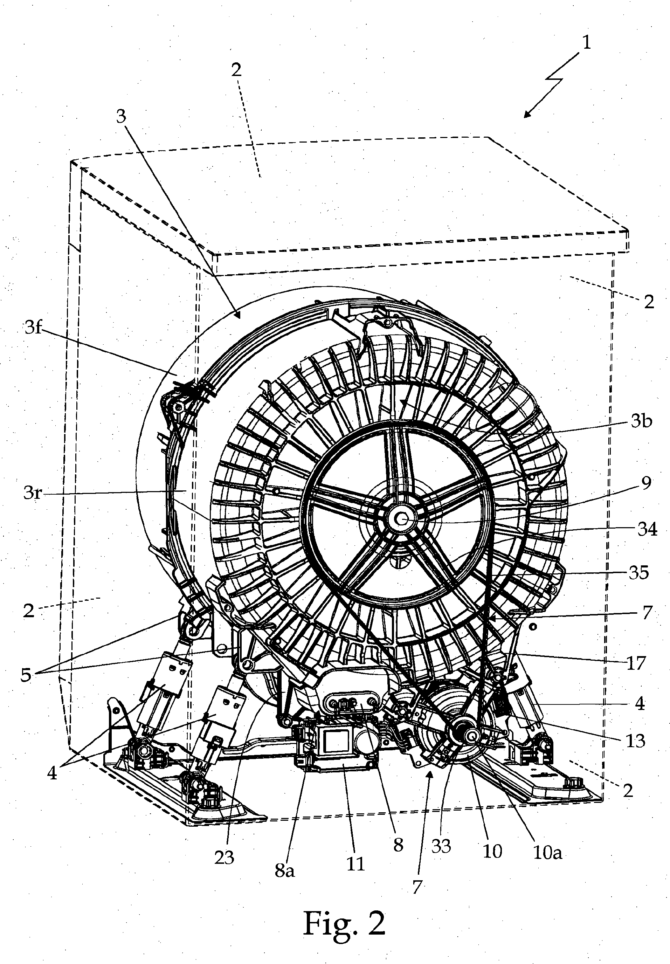

With reference to Figures 2, 3 and 4, in the example shown, in particular, the washing tub 3 is preferably connected to the bottom of the outer boxlike casing 2 via two couples of dampers 4 located on opposite sides of the vertical mid plane of the household appliance. Each couple of dampers 4 comprises two adjacent and reciprocally parallel dampers 4 each having a lower end hinged to the bottom part of the outer boxlike casing 2 and an upper end hinged to the bottom wall of the washing tub 3.

The bottom part of washing tub 3 is therefore preferably provided with two couples of connecting members 5 that are arranged on the bottom part of the washing tub 3 on opposite sides of the vertical mid plane of the household appliance, and the upper end of each damper 4 is hinged to a corresponding connecting member 5 of washing tub 3.

In the example shown, each connecting member 5 is preferably realized in one piece with the washing tub 3 and preferably, though not necessarily, consists in a preferably substantially fork-shaped, tailpiece or bracket 5 that protrudes outwards from the bottom of washing tub 3.

The revolving drum, instead, is housed in axially rotating manner inside the washing tub 3 with its front opening or mouth directly faced/aligned to the laundry loading/unloading opening on the front wall 2a of casing 2, and the drum rotation axis is preferably arranged locally substantially coincident with the preferably substantially horizontally-oriented longitudinal reference axis L of washing tub 3.

In other words, the drum rotation axis is preferably substantially horizontally-oriented and preferably locally substantially coincident with longitudinal reference axis L of washing tub 3.

With reference to Figures 1 to 4, the laundry washing machine 1 furthermore comprises:
- a porthole door 6 which is hinged to the front wall 2a of boxlike casing 2 so as to be able to rotate about a preferably, though non necessarily, vertically-oriented reference axis to and from a closing position in which the peripheral border of the porthole door 6 rests completely on front wall 2a for closing the laundry loading/unloading opening and watertight sealing the washing tub 3;
- a motor assembly 7 which is arranged/located outside the washing tub 3 and is structured for driving into rotation the revolving drum about its longitudinal reference axis inside the washing tub 3;

- a water and detergent supplying assembly (not shown) which is structured for selectively feeding into the washing tub 3 a given amount of detergent, softener and/or other washing agent suitably mixed with the fresh water arriving from the water mains, or simply a given amount of fresh water arriving from the water mains; and
- an electrically-operated water heater 8 which is housed inside washing tub 3 close to the bottom of the latter, and is structured for rapidly heating up the washing water accumulated on the bottom of the same washing tub 3.

In the example shown, in particular, the water heater 8 is preferably a resistor 8 and it is preferably, thought not necessarily, housed inside an outwards-projecting basin-shaped bulge 8a realized on the bottom of washing tub 3. The revolving drum, in turn, is rigidly fixed/mortised to a first axial end of a central supporting pin 9 that extends in axially rotating manner though the rear wall 3b of washing tub 3 while remaining locally coaxial to the drum rotation axis, i.e. to the horizontally-oriented longitudinal reference axis L of washing tub 3, and finally sticks out of the back of washing tub 3.

The motor assembly 7 instead comprises a variable-speed electric motor 10 and a corresponding power control unit 11, both arranged beneath the washing tub 3. The drive shaft 10a of the variable-speed electric motor 10 is mechanically connected to the central supporting pin 9 of the revolving drum so as to be able to drive into rotation the central supporting pin 9 about the drum rotation axis, i.e. about the horizontally-oriented longitudinal reference axis L of washing tub 3; whereas the power control unit 11 is structured to directly energize the electric motor 10 so as to continuously control the rotating speed of the drive shaft 10a of said motor.

In the example shown, in particular, the variable-speed electric motor 10 preferably comprises an asynchronous electric motor, a switched-reluctance electric motor or a brushless electric motor; whereas the power control unit 11 preferably comprises an electronically-controlled inverter or similar power converter structured for varying/controlling frequency and/or voltage of the electric energy supplied to the electric motor 10 so as to continuously control the rotating speed of drive shaft 10a.

Finally, the laundry washing machine 1 is provided with an electronic central control unit (not shown) which is housed inside the boxlike casing 2 and controls activation of the water heater 8, rotating speed of the electric motor 10 and optionally also the opening and closing of the solenoid valves of the water and detergent supplying assembly (not shown), so as to selectively perform one of the user-selectable washing cycles preferably stored into the same central control unit.

The electronic central control unit is structured for directly controlling the power control unit 11 of motor assembly 7 which in turn directly varies/controls the rotating speed of drive shaft 10a.

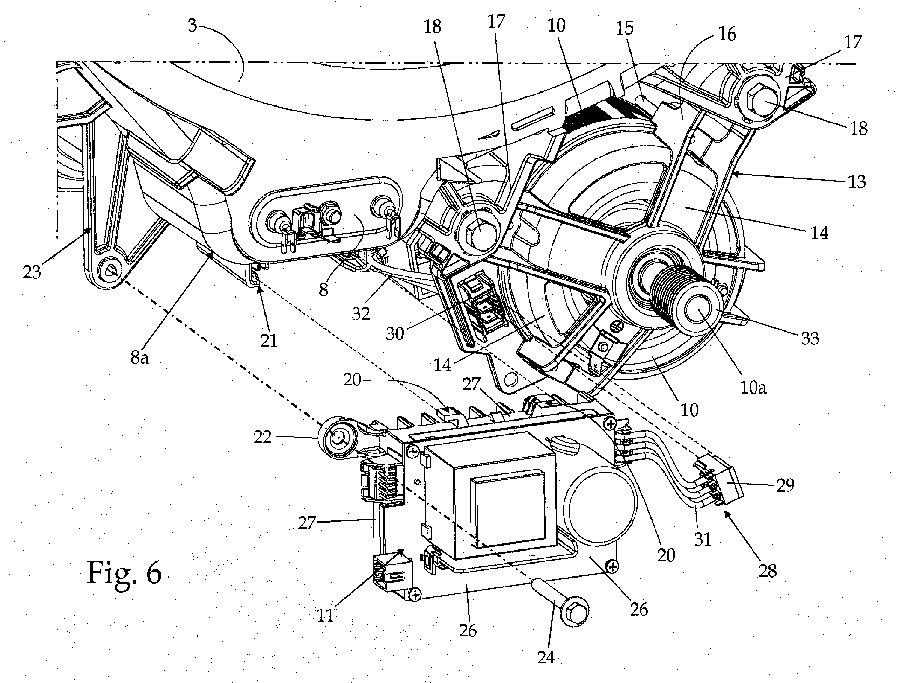

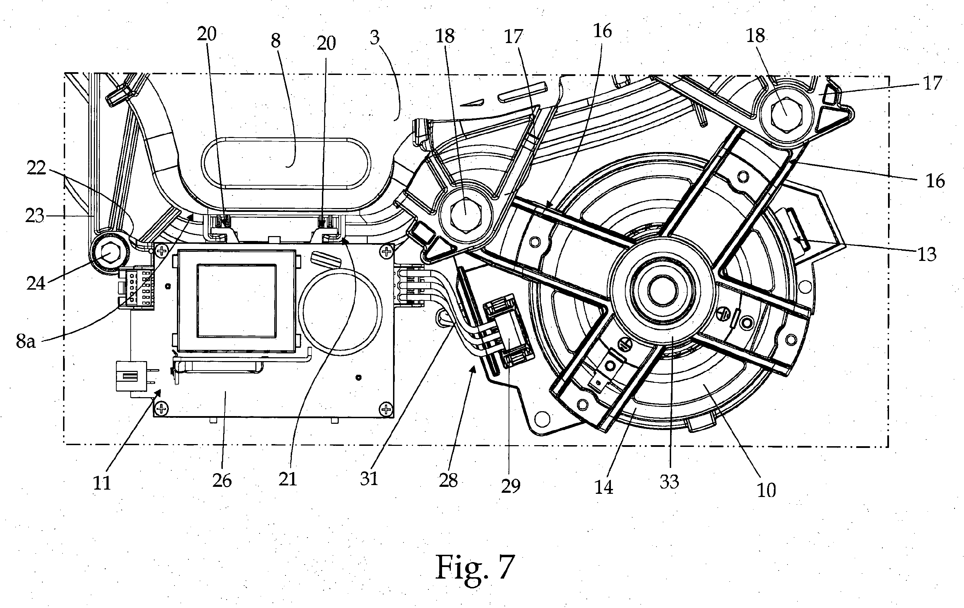

With reference to Figures 2 to 8, power control unit 11 and electric motor 10 are rigidly attached to the bottom part of washing tub 3, both preferably on the sector/area laterally delimited by the connecting members 5 of washing tub 3 to which the upper ends of the dampers 4 are hinged, but the power control unit 11 is rigidly attached to the bottom of the washing tub 3 separately from the electric motor 10, preferably beside the same electric motor 10.

In other words, the variable-speed electric motor 10 and the power control unit 11 are independently rigidly attached to the bottom part of the substantially cylindrical, lateral wall of washing tub 3, preferably one beside the other, so to rigidly hang down from the bottom of the same washing tub 3 independently to one another.

Or rather, the washing tub 3 is provided with two distinct and separated coupling portions, preferably arranged adjacent to one another. The electric motor 10 is rigidly attached to a first coupling portion of the washing tub 3, and the power control unit 11 is rigidly attached to a second coupling portion of washing tub 3, preferably immediately beside the electric motor 10.

In the example shown, in particular, the variable-speed electric motor 10 is rigidly attached to the outer surface of the washing tub 3, underneath the washing tub 3 and preferably immediately beside the basin-shaped bulge 8a of the washing tub 3 that houses the water heater 8, with its drive shaft 10a preferably oriented locally substantially parallel to the drum rotation axis, i.e. to the horizontally-oriented longitudinal reference axis L of washing tub 3.

The electric motor 10 is preferably rigidly attached to one or more coupling portions that are specifically located on the bottom part of the substantially cylindrical, lateral wall of washing tub 3, and are structured to let the electric motor 10 hang down from the bottom of the washing tub 3. These one or more coupling portions are preferably realized in one piece (single piece construction) with the washing tub 3.

The power control unit 11, instead, is rigidly attached to the outer surface of the washing tub 3 separately from the adjacent variable-speed electric motor 10, preferably the power control unit 11 is arranged immediately beside the variable-speed electric motor 10 and preferably also immediately underneath the basin-shaped bulge 8a of the washing tub 3 that houses the water heater 8,.

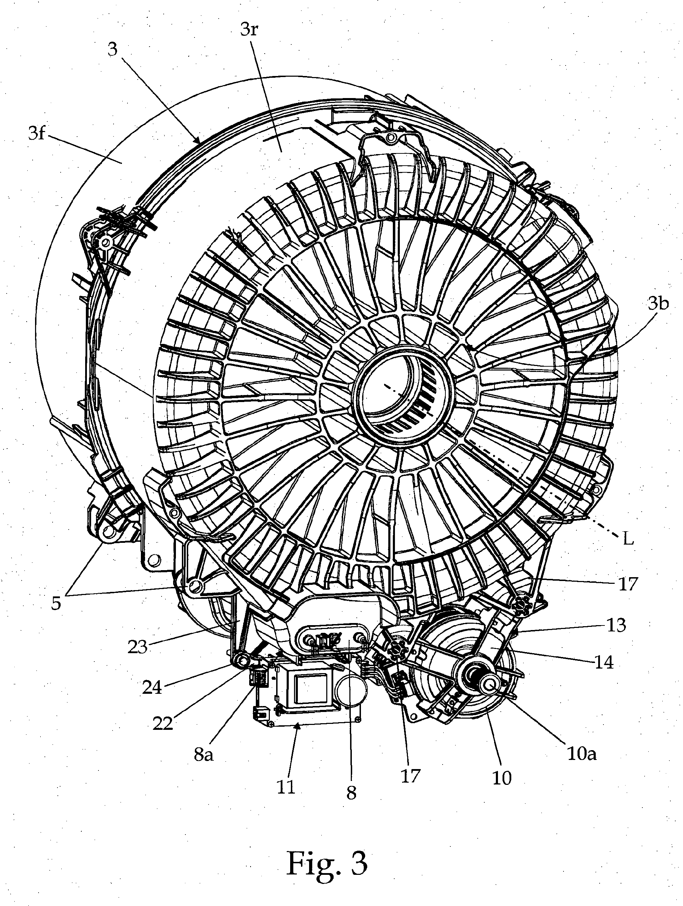

With reference to Figures 3 to 8, in the example shown, in particular, the variable-speed electric motor 10 is preferably rigidly attached to the washing tub 3 via an intermediate supporting structure 13 which is rigidly attached to the bottom part of the substantially cylindrical, lateral wall of washing tub 3, so as to hang down from the bottom of washing tub 3. Preferably, though not necessarily, this intermediate supporting structure 13 is furthermore properly shaped/dimensioned to also encapsulate the electric motor 10 and form the engine pod of the motor.

In the example shown the supporting structure 13 preferably, thought not necessarily, comprises two cup-shaped hemi-shells or end-shields 14 which are properly structured/shaped to fit/match each to a respective axial end of the stator assembly of the electric motor 10; and a number of longitudinal connecting bolts 15 structured for rigidly connecting the two cup-shaped hemi-shells or end-shields 14 to one another while, at same time, keeping the same end-shields 14 reciprocally faced and aligned to one another and in substantially abutment against the axial end of the stator assembly of the electric motor 10, so that the two cup-shaped hemi-shells or end-shields 14 are forced to clamp/embrace and encapsulate in between themselves the stator assembly of the variable-speed electric motor 10.

Each cup-shaped hemi-shell 14 is furthermore suitably shaped/structured so as to be stably rigidly fixable/connectable to the bottom part of the lateral wall of washing tub 3 for rigidly hanging down from the bottom of the same washing tub 3.

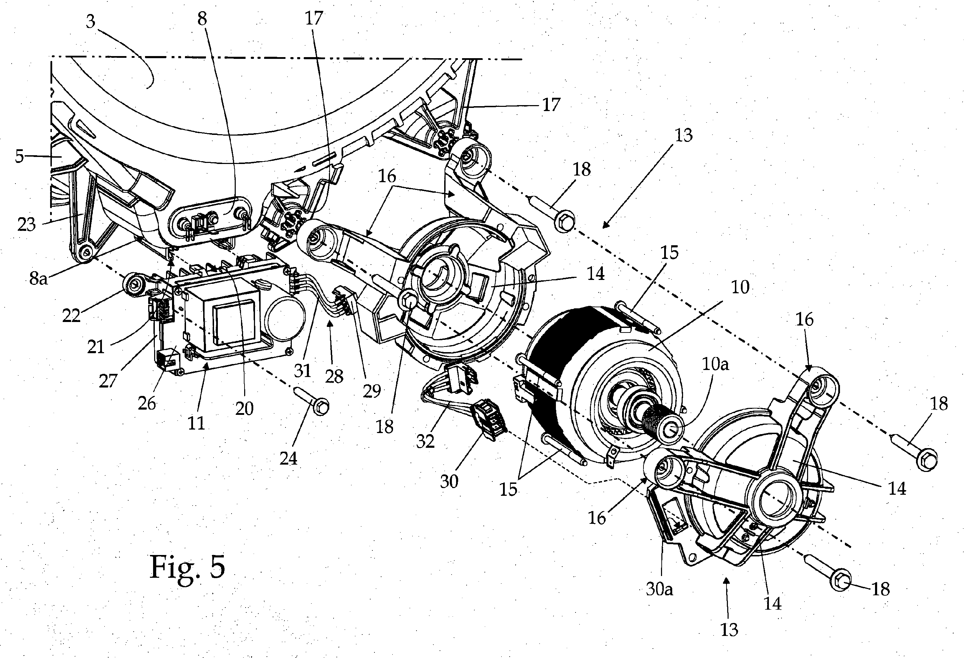

With reference to Figures 5 to 8, each cup-shaped hemi-shell 14 is preferably provided with one or more (two in the example shown) outwards-projecting connecting brackets or arms 16 which are structured for being rigidly fixed/anchored each to a corresponding coupling portion located on the bottom of the washing tub 3, and are properly shaped so to let the hemi-shell 14 hang down from a sector/area of the outer surface of washing tub 3, preferably laterally delimited by the connecting members 5 of washing tub 3.

In the example shown, the coupling portions located on the bottom of the washing tub 3 are preferably realized in one piece (i.e. in a single piece construction) with the washing tub 3, and each outwards-projecting connecting bracket or arm 16 is preferably realized in one piece with the corresponding cup-shaped hemi-shell or end-shield 14.

The distal end of each connecting bracket 16 is preferably structured for being rigidly fixed to a corresponding coupling member 17 that protrudes from the bottom of washing tub 3 towards the bottom of the boxlike casing 2, preferably via a corresponding anchoring bolt 18 that engages in pass-trough manner both the distal end of the bracket 16 and the corresponding supporting member 17. Each coupling member 17 is preferably realized in one piece (i.e. in a single piece construction) with washing tub 3 and preferably comprises an outwards-projecting supporting tailpiece 17 that protrudes from the lateral wall of washing tub 3.

With reference to Figures 3 to 8, the power control unit 11, in turn, is provided with a corresponding coupling member 20 which is suitably shaped/ structured to be engaged into a complementary coupling socket 21 specifically located on the bottom of the washing tub 3, preferably beside the variable-speed electric motor 10 and preferably also immediately beneath the water heater 8, so to let the power control unit 11 rigidly hang down from the bottom of washing tub 3.

The coupling socket 21 is preferably realized in one piece (i.e. in a single piece construction) with washing tub 3, preferably via an injection moulding process.

In the example shown, in particular, the coupling member 20 of the power control unit 11 is preferably structured to form a substantially dovetail joint with the complementary coupling socket 21.

The coupling member 20 preferably comprises a substantially dovetail-shaped, outwards-projecting coupling tailpiece or extension 20 which is suitably shaped/structured to be slidingly inserted into a complementary substantially dovetail-shaped, coupling socket 21 specifically realized on the bottom of washing tub 3, preferably beside the variable-speed electric motor 10 and preferably also immediately beneath the water heater 8, so to let the power control unit 11 rigidly hang down from the bottom of washing tub 3.

Preferably this coupling socket 21 is furthermore realized in one piece (i.e. in a single piece construction) with washing tub 3, directly on the bottom of the outwards-projecting basin-shaped bulge 8a of washing tub 3 that houses the water heater 8 via an injection moulding process.

With reference to Figures 3 to 6, in addition to or in alternative to the coupling member 20, the power control unit 11 is furthermore provided with at least one outwards-projecting, connecting bracket or arm 22 which extends upwards to reach the bottom of the washing tub and is suitably shaped/ structured for being rigidly fixed/anchored to the bottom of the washing tub 3, so as to improve the fixation of the whole power control unit 11 to the washing tub 3.

Alike the connecting brackets or arms 16 of the two cup-shaped hemi-shells 14, the distal end of the additional connecting bracket or arm 22 is preferably, though not necessarily, structured for being rigidly fixed to a corresponding supporting member 23 that protrudes from the bottom of washing tub 3, preferably via a corresponding anchoring bolt 24 which engages in pass-trough manner both the distal end of the connecting bracket or arm 22 and the supporting member 23.

The supporting member 23 is furthermore preferably realized in one piece (i.e. in a single piece construction) with washing tub 3 preferably via an injection moulding process, and preferably, though not necessarily, comprises an outwards-projecting supporting tailpiece or winglet 23 that protrudes from the lateral wall of washing tub 3 approximately towards the bottom of the boxlike casing 2.

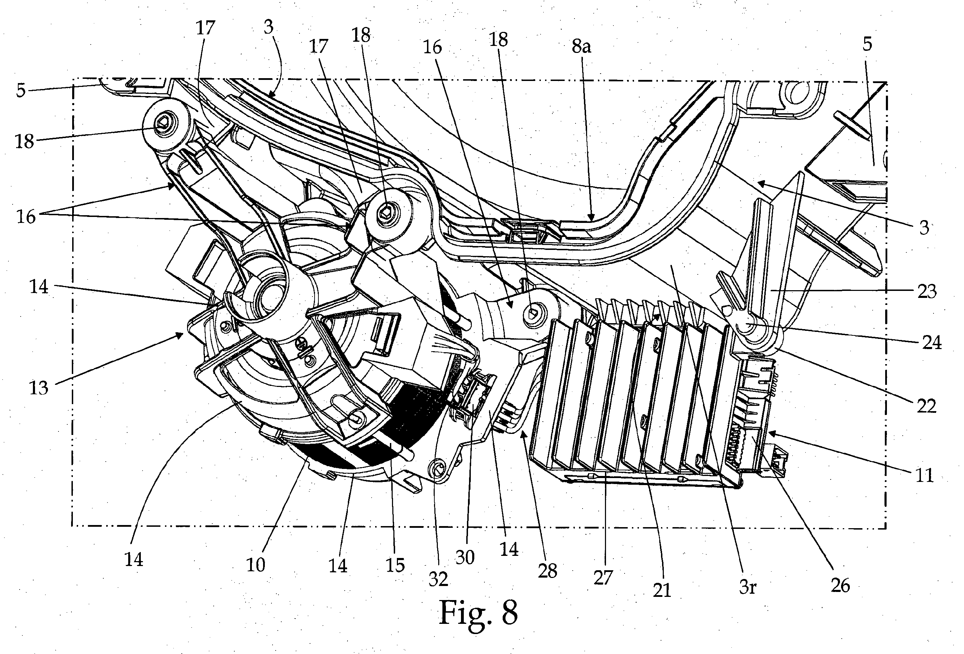

With reference to Figures 4 and 8, the washing tub 3 is preferably composed by a substantially cup-shaped rear hemi-shell 3r and by a substantially funnel-shaped front hemi-shell 3f, both made of plastic material and reciprocally coupled to one another in watertight manner so as to form a substantially cylindrical and bell-shaped, rigid vessel. The coupling members 17 that support the electric motor 10 are preferably realized in one piece (i.e. in a single piece construction) with the substantially cup-shaped rear hemi-shell 3r of washing tub 3, preferably via an injection moulding process. Similarly the coupling socket 21 and/or the supporting member 23 that support the power control unit 11 are preferably realized in one piece (i.e. in a single piece construction) with the substantially cup-shaped rear hemi-shell 3r of washing tub 3, preferably via an injection moulding process.

With reference to Figures 5 and 8, in the example shown, in particular, the power control unit 11 preferably comprises a motherboard 26 directly supporting the electronic component parts, and a preferably finned, flat metal plate 27 coupled to the motherboard 26 so as to form the heat sink (for cooling purpose) of said motherboard.

The coupling member 20, i.e. the substantially dovetail-shaped, outwards-projecting coupling tailpiece or extension 20, preferably projects directly from a side edge of the metal plate 27, and is preferably, though not necessarily, realised in one piece with the metal plate 27. Similarly, the outwards-projecting connecting bracket or arm 22 preferably projects directly from a side edge of the metal plate 27, and is preferably, though not necessarily, realised in one piece with the metal plate 27.

In other words, the coupling member 20 and/or the connecting bracket or arm 22 of the power control unit 11 is/are realized in one piece with the heat sink 27 of the motherboard 26 preferably via a metal moulding process.

The power control unit 11 comprises an electric wire assembly 28 structured for electricity connecting the motherboard 26 to the electric motor 10. This electric wire assembly preferably, though not necessarily, comprises a power connector 29 structured/shaped for being coupleable to a corresponding power socket 30 which is preferably located on the supporting structure 13 of the variable-speed electric motor 10 and is electricity connected directly to the electric motor 10; and a suitable number of electric cables 31 electricity connecting the power connector 29 to the mother board 26.

With particular reference to Figures 5 and 8, in the example shown the power socket 30 of the intermediate supporting structure 13 is preferably fixed/ located on the cup-shaped hemi-shell 14 which is engaged in pass-through manner by the drive shaft 10a of the variable-speed electric motor 10, and it is electricity connected to the stator windings of the variable-speed electric motor 10 via a suitable number of electric cables 32.

In particular, the power socket 30 of the intermediate supporting structure 13 is preferably fitted into a corresponding pass-trough opening 30a realized on an outwards-projecting winglet portion of the cup-shaped hemi-shell 14, preferably arranged immediately adjacent/faced to the power control unit 11.

In other words the power socket 30 is arranged onto the intermediate supporting structure 13 locally immediately adjacent to the power control unit 11.

Finally, with reference to Figures 2, 6 and 7, the motor assembly 7 preferably, though not necessarily, furthermore comprise two preferably substantially coplanar pulleys 33 and 34 which are rigidly fixed/mortised one to the drive shaft 10a of electric motor 10 and the other to the second outwards-projecting axial end of the central supporting pin 9 of the revolving drum; and a annular driving belt 35 which is looped over pulleys 33 and 34 so to mechanically connect the drive shaft 10a to the central supporting pin 9, thus allowing electric motor 10 to selectively drive into rotation the central supporting pin 9 of the revolving drum.

General operation of the front-loading laundry washing machine 1 is clearly inferable from the above description, with no further explanation required.

The advantages correlated to the particular structure of motor assembly 7 are large in number. The independent mechanical connection of the power control unit 11 to the bottom of washing tub 3 allows to attach the power control unit 11 to the washing tub 3 separately and in advance to the variable-speed electric motor 10, with no need to immediately firmly fix the power control unit 11 to the washing tub via the corresponding anchoring bolt 24.

The dovetail coupling between tailpiece 20 and socket 21 is able to temporarily hold the power control unit 11 in place beneath the washing tub 3 while the laundry washing machine 1 moves along the appliance production line, up to the assembly station where the variable-speed electric motor 10 encapsulated in the intermediate supporting structure 13 is rigidly anchored to the bottom of washing tub 3 via the four anchoring bolts 18.

This implies that the anchoring bolt 24 of the power control unit 11 can be screwed in place to rigidly anchor the power control unit 11 to the bottom of washing tub 3 in the same assembly station wherein the four anchoring bolts 18 are screwed in place to rigidly anchor the variable-speed electric motor 10 to the bottom of the washing tub 3, with the costs saving concerned.

The assembly of the laundry washing machine 1, in fact, is greatly simplified and no more needs the manual handling of too heavy components.

In addition to the above, the air gap between electric motor 10 and power control unit 11 improves the cooling of both power control unit 11 and electric motor 10, greatly reduces the mechanical stresses to the power control unit 11.

Clearly, changes may be made to the laundry washing machine 1 described above without, however, departing from the scope of the present invention.

For example, the laundry washing machine 1 may consists in a top-loading laundry washing machine. In other words, the laundry loading/unloading opening and the porthole door 6 are moved to the top wall of the boxlike casing 2, and the substantially cylindrical, hollow washing tub 3 has, on the upper section of the lateral wall, a substantially rectangular-shaped, large pass-through opening which is connected to the superjacent laundry loading/unloading opening via a substantially hopper-shaped, elastically-deformable bellows extending from the top of washing tub 3 to the top wall of casing 2.

## Claims

1. Laundry washing machine (1) comprising an outer casing (2) structured for resting on the floor, a hollow washing tub (3) arranged inside the casing (2), a revolving drum structured for housing the laundry to be washed and housed in axially rotating manner inside said washing tub (3), and a motor assembly (7) structured for driving into rotation said revolving drum inside the washing tub (3); said the motor assembly (7) in turn comprising an electric motor (10) and a power control unit (11) structured to energize the electric motor (10), both attached to the washing tub (3);
the laundry washing machine (1) **being characterized in that** the washing tub (3) comprises distinct and separated, first (17) and second (21, 23) coupling portions; the electric motor (10) being attached to the first coupling portion (17) of the washing tub (3) and the power control unit (11) being attached to the second coupling portion (21, 23) of the washing tub (3).

2. Laundry washing machine according to Claim 1, **characterized in that** the power control unit (11) is provided with a coupling member (20) which is suitably shaped/structured to be engaged into a complementary coupling socket (21) located on the bottom of the washing tub (3), so to let the power control unit (11) hang down from the bottom of the washing tub (3).

3. Laundry washing machine according to Claim 2, **characterized in that** the coupling member (20) of said power control unit (11) is structured to form a substantially dovetail joint with the complementary coupling socket (21) on the washing tub (3).

4. Laundry washing machine according to Claim 3, **characterized in that** the coupling member (20) of said power control unit (11) comprises a substantially dovetail-shaped, outwards-projecting coupling tailpiece or extension (20) which is suitably shaped/structured to be inserted into a substantially dovetail-shaped, complementary coupling socket (21).

5. Laundry washing machine according to any one of the foregoing claims, **characterized in that** the power control unit (11) is provided with at least one outwards-projecting, connecting bracket or arm (22) which is suitably shaped/structured for being fixed/anchored to a corresponding supporting member 23 of the washing tub (3).

6. Laundry washing machine according to any one of Claims 2-5, **characterized in that** the complementary coupling socket (21) and/or supporting member 23 is/are realized in one piece with the washing tub (3).

7. Laundry washing machine according to any one of Claims 2-6, **characterized in that** the laundry washing machine (1) furthermore comprises an electrically-operated water heater (8) which is housed inside the washing tub (3) for rapidly heating up the washing water accumulated on the bottom of the same washing tub (3); and **in that** the coupling socket (21) is located immediately beneath said electrically-operated water heater (8).

8. Laundry washing machine according to Claim 7, **characterized in that** the electrically-operated water heater (8) is housed inside an outwards-projecting basin-shaped bulge (8a) realized on the bottom of the washing tub (3), and **in that** the coupling socket (21) is located on the bottom of said outwards-projecting basin-shaped bulge (8a) of the washing tub (3) housing said water heater (8).

9. Laundry washing machine according to any one of the foregoing claims, **characterized in that** the power control unit (11) comprises a motherboard (26) supporting the electronic component parts, and a metal body (27) coupled to said motherboard (26) so as to form the heat sink of the motherboard, wherein the coupling member (20) of the power control unit (11) and/or the connecting bracket or arm (22) of the power control unit (11) are realised in one piece with said metal body (27).

10. Laundry washing machine according to any one of the foregoing claims, **characterized in that** the electric motor (10) is attached to one or more coupling members (17) located on the bottom of the washing tub (3) and structured to let the electric motor (10) hang down from the bottom of the washing tub (3).

11. Laundry washing machine according to Claim 10, **characterized in that** the one or more coupling members (17) supporting the electric motor (10) are realized in one piece with the washing tub (3).

12. Laundry washing machine according to any one of the foregoing claims, **characterized in that** the electric motor (10) is attached to the washing tub (3) via an intermediate supporting structure (13) that hangs down from the bottom of the washing tub (3), and **in that** the power control unit (11) furthermore comprises an electric wire assembly (28) structured for electricity connecting the power control unit (11) to the adjacent electric motor (10); said electric wire assembly (28) being provided with a power connector (29) structured/shaped for being coupleable to a corresponding power socket (30) located on the intermediate supporting structure (13) of said electric motor (10).

13. Laundry washing machine according to Claim 12, **characterized in that** the intermediate supporting structure (13) comprises two cup-shaped hemi-shells (14) which are properly structured/shaped to fit/match each to a respective axial end of the stator assembly of the electric motor (10); and a number of longitudinal connecting bolts (15) structured for connecting the two hemi-shells (14) to one another so that the two cup-shaped hemi-shells (14) are forced to clamp/embrace and encapsulate in between themselves the stator assembly of the electric motor (10); each cup-shaped hemi-shell (14) being furthermore suitably shaped/structured so as to be stably fixable/connectable to the bottom of washing tub (3) for hanging down from the bottom of the same washing tub (3).

14. Laundry washing machine according to Claim 13, **characterized in that** the said power socket (30) is fixed/located on one of said cup-shaped hemi-shells (14) and is electricity connected to the stator windings of electric motor (10) via a number of electric cables (32).

15. Laundry washing machine according to Claim 13 or 14, **characterized in that** the said power socket (30) is arranged onto the intermediate supporting structure (13) locally immediately adjacent to the power control unit (11).

16. Laundry washing machine according to any one of the foregoing claims, **characterized in that** the hollow washing tub (3) is suspended in floating manner inside the outer casing (2) via a suspension assembly comprising a number of coil springs connecting the upper section of the outer casing (2) to the beneath-located upper part of the washing tub (3), and one or more dampers (4) connecting the bottom part of the washing tub (3) to the beneath-located bottom section of the outer casing (2).

17. Laundry washing machine according to Claim 16, **characterized in that** the bottom part of the washing tub (3) is connected to the beneath-located bottom section of the casing (2) by at least two dampers (4) located on opposite sides of the vertical mid plane of the household appliance, and **in that** both the electric motor (10) and the power control unit (11) are attached to the bottom part of the washing tub (3) on the sector/area laterally delimited by the mechanical connections (5) to said dampers (4).

## Patentansprüche

1. Wäschewaschmaschine (1), die ein äußeres Gehäuse (2), das zum Aufliegen auf dem Boden ausgebildet ist, eine hohle Waschwanne (3), die innerhalb des Gehäuses (2) angeordnet ist, eine Rotationstrommel, die zum Aufnehmen der zu waschenden Wäsche ausgebildet und auf axial umlaufende Weise innerhalb der Waschwanne (3) aufgenommen ist, und eine Motorbaugruppe (7), die dazu ausgebildet ist, die Rotationstrommel innerhalb der Waschwanne (3) in Drehung zu versetzen, aufweist; wobei die Motorbaugruppe (7) ihrerseits einen Elektromotor (10) und eine Leistungssteuerungseinheit (11), die dazu ausgebildet ist, den Elektromotor (10) mit Energie zu versorgen, aufweist, wobei beide an der Waschwanne (3) befestigt sind;
wobei die Wäschewaschmaschine (1) **dadurch gekennzeichnet ist, dass** die Waschwanne (3) getrennte und gesonderte erste (17) und zweite (21, 23) Kopplungsabschnitte aufweist; wobei der Elektromotor (10) an dem ersten Kopplungsabschnitt (17) der Waschwanne (3) befestigt ist und die Leistungssteuerungseinheit (11) an dem zweiten Kopplungsabschnitt (21, 23) der Waschwanne (3) befestigt ist.

2. Wäschewaschmaschine nach Anspruch 1, **dadurch gekennzeichnet, dass** die Leistungssteuerungseinheit (11) mit einem Kopplungsglied (20) versehen ist, das geeignet ausgestaltet/ausgebildet ist, um in einer komplementären Kopplungsbuchse (21), die an dem unteren Ende der Waschwanne (3) angeordnet ist, in Eingriff gebracht zu werden, um die Leistungssteuerungseinheit (11) von dem unteren Ende der Waschwanne (3) herabhängen zu lassen.

3. Wäschewaschmaschine nach Anspruch 2, **dadurch gekennzeichnet, dass** das Kopplungsglied (20) der Leistungssteuerungseinheit (11) dazu ausgebildet ist, mit der komplementären Kopplungsbuchse (21) an der Waschwanne (3) eine im Wesentlichen schwalbenschwanzförmige Verbindung zu bilden.

4. Wäschewaschmaschine nach Anspruch 3, **dadurch gekennzeichnet, dass** das Kopplungsglied (20) der Leistungssteuerungseinheit (11) ein im Wesentlichen schwalbenschwanzförmiges, nach außen vorstehendes Kopplungsendstück oder Erweiterungsstück (20) aufweist, das dazu geeignet ausgestaltet/ausgebildet ist, in eine im Wesentlichen schwalbenschwanzförmige komplementäre Kopplungsbuchse (21) eingeführt zu werden.

5. Wäschewaschmaschine nach einem beliebigen der vorhergehenden Ansprüche, **dadurch gekennzeichnet, dass** die Leistungssteuerungseinheit (11) mit mindestens einem nach außen vorstehenden Verbindungsbügel oder -arm (22) versehen ist, welcher geeignet ausgestaltet/ausgebildet ist, um an einem entsprechenden Tragglied (23) der Waschwanne (3) befestigt/verankert zu werden.

6. Wäschewaschmaschine nach einem beliebigen der Ansprüche 2-5, **dadurch gekennzeichnet, dass** die komplementäre Kopplungsbuchse (21) und/oder das Tragglied (23) einstückig mit der Waschwanne (3) ausgeführt ist/sind.

7. Wäschewaschmaschine nach einem beliebigen der Ansprüche 2-6, **dadurch gekennzeichnet, dass** die Wäschewaschmaschine (1) ferner eine elektrisch betriebene Wassererhitzvorrichtung (8), die innerhalb der Waschwanne (3) untergebracht ist, zum schnellen Erhitzen des Waschwassers, das sich an dem unteren Ende derselben Waschwanne (3) angesammelt hat, aufweist; und dadurch, dass die Kopplungsbuchse (21) unmittelbar unter der elektrisch betriebenen Wassererhitzvorrichtung (8) angeordnet ist.

8. Wäschewaschvorrichtung nach Anspruch 7, **dadurch gekennzeichnet, dass** die elektrisch betriebene Wassererhitzvorrichtung (8) innerhalb einer nach außen vorstehenden beckenförmigen Ausbauchung (8a), die an dem unteren Ende der Waschwanne (3) realisiert ist, aufgenommen ist, und dadurch, dass die Kopplungsbuchse (21) an dem unteren Ende der nach außen vorstehenden beckenförmigen Ausbauchung (8a) der Waschwanne (3), welche die Wassererhitzvorrichtung (8) aufnimmt, angeordnet ist.

9. Wäschewaschmaschine nach einem beliebigen der vorhergehenden Ansprüche, **dadurch gekennzeichnet, dass** die Leistungssteuerungseinheit (11) eine Hauptplatine (26), welche die elektronischen Bauteile trägt, und einen Metallkörper (27), der mit der Hauptplatine (26) gekoppelt ist, um die Wärmesenke der Hauptplatine zu bilden, aufweist, wobei das Kopplungsglied (20) der Leistungssteuerungseinheit (11) und/oder der Verbindungsbügel oder -arm (22) der Leistungssteuerungseinheit (11) einstückig mit dem Metallkörper (27) ausgeführt sind.

10. Wäschewaschmaschine nach einem beliebigen der vorhergehenden Ansprüche, **dadurch gekennzeichnet, dass** der Elektromotor (10) an einem oder mehreren Kopplungsgliedern (17) befestigt ist, die an dem unteren Ende der Waschwanne (3) angeordnet sind und dazu ausgebildet sind, um den Elektromotor (10) von dem unteren Ende der Waschwanne (3) herabhängen zu lassen.

11. Wäschewaschmaschine nach Anspruch 10, **dadurch gekennzeichnet, dass** das eine oder die mehreren Kopplungsglieder (17), die den Elektromotor (10) tragen, einstückig mit der Waschwanne (3) ausgeführt sind.

12. Wäschewaschmaschine nach einem beliebigen der vorhergehenden Ansprüche, **dadurch gekennzeichnet, dass** der Elektromotor (10) über eine Zwischentragkonstruktion (13), die von dem unteren Ende der Waschwanne (3) herabhängt, an der Waschwanne (3) befestigt ist, und dadurch, dass die Leistungssteuerungseinheit (11) ferner eine elektrische Drahtbaugruppe (28) aufweist, die für Elektrizität ausgebildet ist und die Leistungssteuerungseinheit (11) mit dem benachbarten Elektromotor (10) verbindet; wobei die elektrische Drahtbaugruppe (28) mit einem Stromverbinder (29) versehen ist, der dazu ausgebildet/ausgestaltet ist, mit einer entsprechenden Strombuchse (30) koppelbar zu sein, die an der Zwischentragkonstruktion (13) des Elektromotors (10) angeordnet ist.

13. Wäschewaschmaschine nach Anspruch 12, **dadurch gekennzeichnet, dass** die Zwischentragkonstruktion (13) zwei tassenförmige Halbschalen (14) aufweist, die geeignet ausgebildet/ausgestaltet sind, um jeweils zu einem jeweiligen axialen Ende der Ständerbaugruppe des Elektromotors (10) zu passen bzw. dieser zu entsprechen; und eine Anzahl von Längsverbindungsschrauben (15), die dazu ausgebildet sind, um die zwei Halbschalen (14) derart miteinander zu verbinden, dass die zwei tassenförmigen Halbschalen (14) dazu gezwungen werden, die Ständerbaugruppe des Elektromotors (10) zwischen ihnen einzuklemmen/zu umfassen und einzukapseln; wobei jede tassenförmige Halbschale (14) ferner geeignet ausgestaltet/ausgebildet ist, um an dem unteren Ende der Waschwanne (3) zum Herabhängen von dem unteren Ende derselben Waschwanne (3) stabil befestigbar/verbindbar zu sein.

14. Wäschewaschmaschine nach Anspruch 13, **dadurch gekennzeichnet, dass** die Strombuchse (30) an einer der tassenförmigen Halbschalen (14) befestigt/angeordnet ist und über eine Anzahl von elektrischen Kabeln (32) mit den Ständerwicklungen des Elektromotors (10) elektrisch verbunden ist.

15. Wäschewaschmaschine nach Anspruch 13 oder 14, **dadurch gekennzeichnet, dass** die Strombuchse (30) auf der Zwischentragkonstruktion (13) lokal, unmittelbar neben der Leistungssteuerungseinheit (11), angeordnet ist.

16. Wäschewaschmaschine nach einem beliebigen der vorhergehenden Ansprüche, **dadurch gekennzeichnet, dass** die hohle Waschwanne (3) auf schwimmende Weise innerhalb des äußeren Gehäuses (2) über eine Aufhängungsbaugruppe aufgehängt ist, welche eine Anzahl von Spiralfedern, die den oberen Abschnitt des äußeren Gehäuses (2) mit dem darunter angeordneten oberen Teil der Waschwanne (3) verbinden, und einen oder mehrere Dämpfer (4), die den unteren Teil der Waschwanne (3) mit dem darunter angeordneten unteren Teil des äußeren Gehäuses (2) verbinden, aufweist.

17. Wäschewaschmaschine nach Anspruch 16, **dadurch gekennzeichnet, dass** der untere Teil der Waschwanne (3) mit dem darunter angeordneten unteren Abschnitt des Gehäuses (2) durch mindestens zwei Dämpfer (4) verbunden ist, die auf entgegengesetzten Seiten der senkrechten Mittelebene des Haushaltsgeräts angeordnet sind, und dadurch, dass sowohl der Elektromotor (10) als auch die Leistungssteuerungseinheit (11) an dem unteren Teil der Waschwanne (3) an dem Sektor/Bereich befestigt sind, der durch die mechanischen Verbindungen (5) mit den Dämpfern (4) seitlich begrenzt wird.

## Revendications

1. Machine à laver le linge (1) comprenant une enceinte extérieure (2) structurée pour reposer sur le sol, une cuve de lavage creuse (3) agencée à l'intérieur de l'enceinte (2), un tambour rotatif structuré pour contenir le linge à laver et logé d'une manière axialement rotative à l'intérieur de ladite cuve de lavage (3), et un ensemble de moteur (7) structuré pour entraîner ledit tambour rotatif à tourner à l'intérieur de la cuve de lavage (3); ledit ensemble de moteur (7) comprenant à son tour un moteur électrique (10) et une unité de commande de puissance (11) structurée pour alimenter le moteur électrique (10), tous les deux attachés à la cuve de lavage (3);
la machine à laver le linge (1) étant **caractérisée en ce que** la cuve de lavage (3) comprend des première (17) et seconde (21, 23) parties de couplage séparées distinctes; le moteur électrique (10) étant attaché à la première partie de couplage (17) de la cuve de lavage (3) et l'unité de commande de puissance (11) étant attachée à la seconde partie de couplage (21, 23) de la cuve de lavage (3).

2. Machine à laver le linge selon la revendication 1, **caractérisée en ce que** l'unité de commande de puissance (11) est pourvue d'un élément de couplage (20) qui est adéquatement configuré/structuré de manière à être engagé dans une douille de couplage complémentaire (21) qui est située dans le fond de la cuve de lavage (3), de manière à laisser l'unité de commande de puissance (11) pendre depuis le fond de la cuve de lavage (3).

3. Machine à laver le linge selon la revendication 2, **caractérisée en ce que** l'élément de couplage (20) de ladite unité de commande de puissance (11) est structurée de manière à former un joint sensiblement à queue d'aronde avec la douille de couplage complémentaire (21) sur la cuve de lavage (3).

4. Machine à laver le linge selon la revendication 3, **caractérisée en ce que** l'élément de couplage (20) de ladite unité de commande de puissance (11) comprend un about ou une extension de couplage sensiblement en forme de queue d'aronde faisant saillie vers l'extérieur (20) qui est adéquatement configuré(e)/structuré(e) de manière à être inséré(e) dans une douille de couplage complémentaire sensiblement en forme de queue d'aronde (21).

5. Machine à laver le linge selon l'une quelconque des revendications précédentes, **caractérisée en ce que** l'unité de commande de puissance (11) est pourvue d'au moins une console ou d'au moins un bras de connexion faisant saillie vers l'extérieur (22) qui est adéquatement configuré(e)/structuré(e) de manière à être fixé(e)/ancré(e) à un élément de support correspondant (23) de la cuve de lavage (3).

6. Machine à laver le linge selon l'une quelconque des revendications 2 à 5, **caractérisée en ce que** la douille de couplage complémentaire (21) et/ou l'élément de support (23) est (sont) réalisé(s) d'une seule pièce avec la cuve de lavage (3).

7. Machine à laver le linge selon l'une quelconque des revendications 2 à 6, **caractérisée en ce que** la machine à laver le linge (1) comprend en outre un chauffe-eau à commande électrique (8) qui est logé à l'intérieur de la cuve de lavage (3) afin de chauffer rapidement l'eau de lavage accumulée au fond de ladite cuve de lavage (3); et **en ce que** la douille de couplage (21) est située immédiatement en dessous dudit chauffe-eau à commande électrique (8).

8. Machine à laver le linge selon la revendication 7, **caractérisée en ce que** le chauffe-eau à commande électrique (8) est logé à l'intérieur d'un renflement en forme de bassin faisant saillie vers l'extérieur (8a) réalisé au fond de la cuve de lavage (3), et **en ce que** la douille de couplage (21) est située au fond dudit renflement en forme de bassin faisant saillie vers l'extérieur (8a) de la cuve de lavage (3) contenant ledit chauffe-eau (8).

9. Machine à laver le linge selon l'une quelconque des revendications précédentes, **caractérisée en ce que** l'unité de commande de puissance (11) comprend une carte mère (26) qui supporte les parties composantes électroniques, et un corps de métal (27) qui est couplé à ladite carte mère (26) de manière à former le dissipateur thermique de la carte mère, dans lequel l'élément de couplage (20) de l'unité de commande électronique (11) et/ou la console ou le bras de connexion (22) de l'unité de commande de puissance (11) sont réalisés d'une seule pièce avec ledit corps de métal (27).

10. Machine à laver le linge selon l'une quelconque des revendications précédentes, **caractérisée en ce que** le moteur électrique (10) est attaché à un ou plusieurs élément(s) de couplage (17) situé(s) au fond de la cuve de lavage (3) et structuré(s) de manière à laisser le moteur électrique (10) pendre depuis le fond de la cuve de lavage (3).

11. Machine à laver le linge selon la revendication 10, **caractérisée en ce que** le ou les élément(s) de couplage (17) qui supporte(nt) le moteur électrique (10) est (sont) réalisé(s) d'une seule pièce avec la cuve de lavage (3).

12. Machine à laver le linge selon l'une quelconque des revendications précédentes, **caractérisée en ce que** le moteur électrique (10) est attaché à la cuve de lavage (3) par le biais d'une structure de support intermédiaire (13) qui pend depuis le fond de la cuve de lavage (3), et **en ce que** l'unité de commande de puissance (11) comprend en outre un ensemble de fil électrique (28) qui est structuré pour connecter électriquement l'unité de commande de puissance (11) au moteur électrique adjacent (10); ledit ensemble de fil électrique (28) étant pourvu d'un connecteur électrique (29) structure/configuré de manière à pouvoir être couplé à une douille électrique correspondante (30) située sur la structure de support intermédiaire (13) dudit moteur électrique (10).

13. Machine à laver le linge selon la revendication 12, **caractérisée en ce que** la structure de support intermédiaire (13) comprend deux demi-coquilles en forme de coupe (14) qui sont adéquatement structurées/configurées de manière à s'adapter/se coupler chacune à une extrémité axiale respective de l'ensemble de stator du moteur électrique (10); et un certain nombre de boulons de connexion longitudinaux (15) structurés pour connecter les deux demi-coquilles (14) l'une à l'autre de telle sorte que les deux demi-coquilles en forme de coupe (14) soient forcées de serrer/encercler et encapsuler entre elles l'ensemble de stator du moteur électrique (10); chaque demi-coquille en forme de coupe (14) étant en outre adéquatement configurée/structurée de manière à pouvoir être fixée/connectée de façon stable au fond de la cuve de lavage (3) de façon à pendre depuis le fond de ladite cuve de lavage (3).

14. Machine à laver le linge selon la revendication 13, **caractérisée en ce que** ladite douille électrique (30) est fixée/située sur une desdites demi-coquilles en forme de coupe (14) et est électriquement connectée aux enroulements de stator du moteur électrique (10) par l'intermédiaire d'un certain nombre de câbles électriques (32).

15. Machine à laver le linge selon la revendication 13 ou 14, **caractérisée en ce que** ladite douille électrique (30) est agencée sur la structure de support intermédiaire (13) localement immédiatement adjacente à l'unité de commande de puissance (11).

16. Machine à laver le linge selon l'une quelconque des revendications précédentes, **caractérisée en ce que** la cuve de lavage creuse (3) est suspendue d'une manière flottante à l'intérieur de l'enceinte extérieure (2) par l'intermédiaire d'un ensemble de suspension comprenant un certain nombre de ressorts hélicoïdaux qui connectent la section supérieure de l'enceinte extérieure (2) à la partie supérieure située en dessous de la cuve de lavage (3), et un ou plusieurs amortisseur(s) (4) qui connecte(nt) la partie inférieure de la cuve de lavage (3) à la section inférieure située en dessous de l'enceinte extérieure (2).

17. Machine à laver le linge selon la revendication 16, **caractérisée en ce que** la partie inférieure de la cuve de lavage (3) est connectée à la section inférieure située en dessous de l'enceinte (2) par au moins deux amortisseurs (4) situés sur des côtés opposés du plan médian vertical de l'appareil électroménager, et **en ce que** le moteur électrique (10) et l'unité de commande de puissance (11) sont tous les deux attachés à la partie inférieure de la cuve de lavage (3) sur le secteur/la région délimité(e) latéralement par les connexions mécaniques (5) auxdits amortisseurs (4).
